# FASCICULE DE BREVET EUROPEEN

(11) **EP 1 974 457 B1**
(45) Date de publication et mention de la délivrance du brevet: **14.08.2013**
(21) Numéro de dépôt: 07718317.6
(22) Date de dépôt: 05.01.2007
(51) Int. Cl.: H02P 6/14

(54) **PROCEDE DE COMMANDE D'UNE MACHINE ELECTRIQUE TOURNANTE POLYPHASEE**
VERFAHREN ZUM REGELN EINER ROTIERENDEN MEHRPHASIGEN ELEKTRISCHEN MASCHINE
METHOD FOR CONTROLLING A POLYPHASE ROTATING ELECTRICAL MACHINE

(30) Priorité: 20.01.2006 FR 0600536
(43) Date de publication de la demande: 01.10.2008
(73) Titulaire: VALEO EQUIPEMENTS ELECTRIQUES MOTEUR, 94046 Créteil Cedex (FR)
(72) Inventeur: MASFARAUD, Julien, 75010 Paris (FR); DOFFIN, Hugues, 94000 Créteil (FR); BOUDJEMAI, Farouk, 91460 Marcoussis (FR)
(86) Numéro de dépôt international: PCT/FR2007/050617
(87) Numéro de publication internationale: WO 2007/083049

(56) Documents cités:
- EP-A1- 0 260 176
- WO-A-2004/100351
- FR-A- 2 026 121
- US-A- 3 909 688
- US-A- 4 271 385
- US-A1- 2005 283 324
- US-B1- 6 924 611

## Description

### Domaine de l'invention

L'invention concerne un procédé de commande d'une machine électrique tournante polyphasée réversible, dans laquelle au moins un circuit bobiné est alimenté à travers un pont d'interrupteurs, telle que par exemple un alternateur-démarreur.

### Etat de la technique

Une machine électrique tournante comprend classiquement un rotor et un stator. L'un de ces éléments est parcouru par un courant continu et génère ainsi un champ magnétique constant et d'orientation fixe par rapport à cet élément. L'autre élément comprend une pluralité d'enroulements distincts et espacés angulairement ; chaque enroulement est parcouru par un courant déphasé par rapport à celui des autres enroulements de manière à créer un champ magnétique tournant. La coexistence du champ d'orientation fixe du premier élément et du champ tournant du second élément entraînent la rotation de ces éléments l'un par rapport à l'autre, c'est-à-dire la rotation du rotor par rapport au stator.

Les différents courants sont généralement injectés dans les enroulements de l'élément polyphasé à travers un pont formé par des interrupteurs de puissance (en général des diodes associées à des transistors de puissance).

Ce pont de puissance est en général piloté par un module électronique qui fixe les instants d'ouverture et de fermeture des interrupteurs et commande ainsi la phase des différents courants à travers les enroulements.

Afin de déterminer les instants de commande des interrupteurs, le module électronique utilise couramment des signaux représentatifs de la position du rotor par rapport au stator, tel que par exemple des capteurs de position régulièrement répartis sur la circonférence de la machine tournante, qui envoient chacun des signaux périodiques à la fréquence de rotation du rotor et déphasés l'un par rapport à l'autre.

Le document FR-A-2 026 121 décrit un procédé de commande d'une machine électrique tournante polyphasée réversible (2), dans laquelle au moins un circuit bobiné est alimenté a travers un pont d'interrupteurs (4), avec les étapes suivantes:
- commande du pont (4) pour délivrer au circuit bobiné une tension périodique avec un décalage de phase (α) par rapport a une force électromotrice induite dans ledit circuit bobiné, tel qu'un couple moteur (+Mₙ) est généré, le décalage de phase (α) ayant initialement une première valeur (x);
- commande du pont (4) pour délivrer audit circuit bobiné une tension périodique avec ledit décalage de phase (α) entraînant la réalisation d'un couple compris entre ledit couple moteur (+Mₙ) et l'opposé (-Mₙ) du dit couple moteur, le décalage de phase prenant une pluralité de valeurs lors de cette commande;
- basculement du pont (4) en mode redressement.

Le document FR-A-0 260 176 décrit un procédé de commande d'une machine électrique réversible pouvant fonctionner soit en générateur (alternateur) soit en moteur, destinée à un véhicule automobile, cette machine comprenant un induit (4) et un inducteur (1) bobinés, l'inducteur (1) étant commandé, lors du fonctionnement en alternateur par un régulateur (2a). Lors du fonctionnement en moteur, on contrôle la tension d'alimentation de l'induit (4) et/ou l'excitation (1) afin d'obtenir les caractéristiques souhaitées en couple-vitesse.

Dans le cas où la machine électrique tournante est réversible, le pont de puissance joue le rôle d'un pont redresseur lors du fonctionnement en mode redressement du pont de puissance qui correspond à un fonctionnement de type alternateur de la machine.

Dans le but de s'approcher d'un couple optimal sur une plage plus importante de vitesses de rotation, le document WO 2004/100351 propose de traiter les signaux issus des capteurs par pondération et sommation, en pratique au moyen d'un circuit analogique composé de condensateurs et de résistances, ce qui permet de réaliser des décalages de phase continûment variables sur toute la plage des vitesses de rotation.

Grâce à ce type de solution, il est possible de fournir un couple conséquent même pour des vitesses de rotation importantes, ce qui peut être par exemple utilisé pour assister un moteur thermique lors des phases d'accélération d'un véhicule.

Toutefois, lorsqu'on bascule directement au fonctionnement en mode alternateur dans ces conditions, par exemple en fin de phase d'accélération du véhicule, la force électromagnétique appliquée au pont de puissance entraîne sans précautions particulières un débit important sur le réseau qui peut se révéler inacceptable à des vitesses de rotation élevées.

On doit de ce fait attendre une diminution suffisamment importante du courant continu (*"défluxage"* de la partie parcourue par ce courant, à savoir en général le rotor) avant de revenir au mode alternateur et le changement de mode est donc tributaire de la constante de temps de défluxage, ce qui n'est pas non plus souhaitable.

### Objet de l'invention

Afin notamment d'éviter ces problèmes, l'invention propose un procédé de commande d'une machine électrique tournante polyphasée réversible, selon la revendication 1.

Le mode de fonctionnement *"moteur'* est ainsi séparé du mode *"alternateur'* classique (le pont fonctionne en redresseur) par un mode dans lequel le pont est commandé (avec un couple résistant), qui peut donc être dénommé *"mode alternateur piloté".* La transition entre les deux modes est ainsi atténuée.

L'invention permet notamment, lors du passage du mode de fonctionnement « moteur » au mode de fonctionnement « alternateur », de contrôler la décroissance du courant absorbé par le pont d'interrupteurs et/ou de limiter un pic de tension à une borne de la batterie.

Selon des modes de réalisation, le dispositif selon l'invention peut comporter une ou plusieurs des caractéristiques suivantes :

Le décalage de phase de la tension délivrée peut prendre une pluralité de valeurs décroissantes dans le temps entre la première valeur de décalage phase et une seconde valeur de décalage de phase, ce qui permet de faire varier par étapes le couple et atténue encore la transition entre les deux modes.

L'utilisation du premier décalage de phase et l'utilisation du second décalage sont séparées d'un temps compris entre 1µs et 100 µs. Le passage en mode alternateur piloté se fait donc très rapidement (par rapport notamment au temps de défluxage mentionné plus haut).

L'étape de basculement peut être postérieure de plus de 10 ms à l'étape de réduction pour profiter d'une partie du phénomène de défluxage.

L'étape de basculement est toutefois de préférence postérieure de moins de 0,5 s à l'étape de réduction, ce qui permet un basculement plus rapide que la solution classique consistant à attendre le défluxage total.

La vitesse de rotation de la machine tournante est en général (mais pas nécessairement) essentiellement constante au cours de l'ensemble des étapes précitées.

Par ailleurs, on peut prévoir que ledit couple de signe opposé vaut environ le couple exercé par la machine tournante en mode redressement, ce qui limite encore les phénomènes transitoires.

### Brève description des Figures

D'autres caractéristiques et avantages de l'invention apparaîtront à la lumière de la description qui suit, faits en référence aux dessins annexés dans lesquels :
- la figure 1 représente les éléments de circuit électrique d'une machine électrique tournante polyphasée ;
- la figure 2 représente un mode de réalisation du bloc d'avance de phase de la figure 1 ;
- les figures 3 et 4 représentent des modes possibles de réalisation d'un circuit mélangeur de la figure 2 ;
- la figure 5 représente une variante de réalisation du circuit mélangeur ;
- la figure 6 représente un exemple de transition d'un mode moteur à un mode alternateur conforme aux enseignements de l'invention.

### Description détaillée de modes de réalisation non limitatifs de l'invention

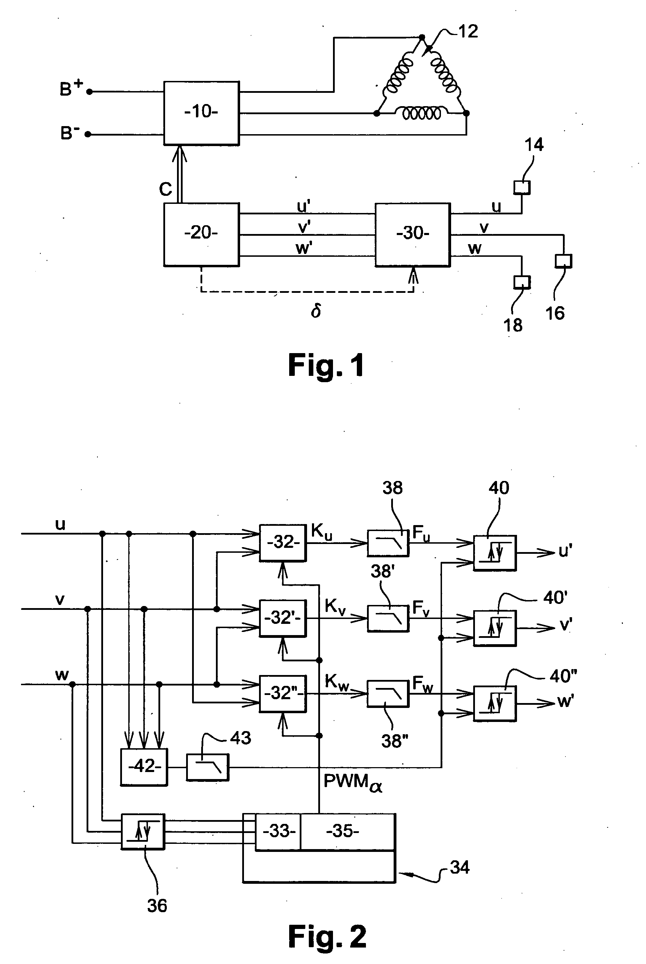

**La** **figure 1** représente les éléments essentiels du circuit électrique d'une machine électrique tournante polyphasée, par exemple réversible du type alternateur-démarreur.

Une telle machine comprend un pont de puissance 10 qui alimente les trois phases d'un stator triphasé 12 à partir d'une tension générée entre les deux bornes B⁺, B⁻ d'une batterie d'alimentation.

Le pont de puissance 10 est formé d'interrupteurs (non représentés) qui sont commandés par des signaux de commande C de sorte que les différents enroulements du stator 12 soient parcourus par des signaux décalés de 120° l'un par rapport à l'autre.

Les signaux de commande C sont générés par un module électronique de commande sur la base de signaux U, V, W issus de trois capteurs linéaires 14, 16, 18 équirépartis sur la circonférence de la machine tournante.

Précisément, les signaux U, V, W issus des capteurs sont traités par un bloc d'avance de phase 30 qui délivre trois signaux U', V', W' correspondant aux signaux capteurs U, V, W avec une avance de phase δ par rapport à ceux-ci.

Les signaux U', V', W' générés par le bloc d'avance de phase 30 sont utilisés par un circuit de commande 20 pour former les signaux de commande C du pont de puissance 10.

L'avance de phase δ mentionnée ci-dessus dépend par exemple de la vitesse de la machine telle que mesurée au moyen des signaux capteurs U, V, W. L'avance de phase δ peut dans ce cas être déterminée en temps réel au sein du bloc d'avance de phase 30 comme décrit ci-après.

En variante, on peut prévoir que le circuit de commande 20 génère un signal lié à la consigne d'avance de phase δ comme indiqué en traits pointillés en figure 1. Pour ce faire, le circuit de commande comprend par exemple un microcontrôleur (incluant un microprocesseur) qui détermine la vitesse de rotation de la machine sur la base des signaux U', V', W' et qui en déduit le décalage de phase δ à utiliser, éventuellement également fonction d'autres conditions, tel que la phase de fonctionnement. La valeur de décalage δ associée à une vitesse et condition de fonctionnement données est par exemple mémorisée au sein du microcontrôleur dans une table de correspondance.

Lorsque la machine fonctionne en mode alternateur, le pont de puissance 10 joue le rôle d'un pont redresseur qui assure la transmission de l'énergie de la machine (et notamment du stator 12) à la batterie (borne B⁺, B⁻).

**La** **figure 2** représente un mode de réalisation envisageable pour le bloc d'avance de phase 30.

Dans ce mode de réalisation, chaque signal U, V, W issu d'un capteur 14, 16, 18 est appliqué à une première entrée d'un circuit dit *"mélangeur* respectivement 32, 32', 32" dont des exemples de réalisation seront donnés dans la suite.

Chaque circuit mélangeur 32, 32', 32" reçoit également sur une seconde entrée le signal V, W, U issu d'un capteur et ayant une avance de phase de 120° par rapport au signal capteur U, V, W reçu sur sa première entrée.

Ainsi, chaque circuit mélangeur 32, 32', 32" reçoit sur sa première entrée l'un des signaux capteurs U, V, W et sur sa seconde entrée le signal capteur V, W, U en avance de phase de 120° par rapport à celui reçu sur la première entrée.

Chaque circuit mélangeur 32, 32', 32" reçoit également un signal de commande PWM_{α} formé d'impulsions avec un rapport cyclique α. Le signal de commande PWM_{α} commande la commutation d'éléments de commutation des circuits mélangeurs 32, 32", 32" comme décrit plus bas.

Dans le mode de réalisation représenté en figure 2, le même signal de commande PWM_{α} est appliqué à l'ensemble des trois mélangeurs 32, 32', 32". En variante, on pourrait naturellement prévoir des signaux de commande spécifiques pour chaque circuit mélangeur.

Dans le mode de réalisation représenté en figure 2, le signal de commande PWM_{α} est généré sur une broche d'un microprocesseur 34 dont une partie 35 est dédiée à la génération de ce signal de commande PWM_{α} (par partie, on entend ici une partie du logiciel qui commande le microprocesseur 34 ; en variante, on pourrait envisager la réalisation de la même fonction en logique câblée).

Comme visible en figure 2, le microprocesseur 34 reçoit également les signaux U, V, W issus des capteurs 14, 16, 18 à travers un premier circuit déclencheur à hystérésis 36. Les signaux ainsi reçus sont destinés à une partie 33 du microprocesseur 34 dédiée à la détermination de la vitesse de la machine tournante.

L'information de vitesse de rotation ainsi déterminée est notamment utilisée dans le microprocesseur 34 pour déterminer l'avance de phase à réaliser par le bloc d'avance de phase 30 en fonction duquel est déterminé le rapport cyclique α du signal PWM_{α} à appliquer au circuit mélangeur 32, 32', 32".

La relation entre la vitesse déterminée par la partie de détermination de la vitesse 33 et le rapport cyclique α (soit directement, soit par l'intermédiaire du décalage de phase δ) est par exemple mémorisé dans une mémoire associée au microprocesseur 34 sous forme d'une table de correspondance.

Le décalage de phase δ souhaité (et par conséquent le rapport cyclique α utilisé) peut naturellement dépendre d'autres paramètres que la vitesse de rotation de la machine tournante, tel que par exemple le mode de fonctionnement de la machine tournante. On peut dans ce cas prévoir plusieurs tables de correspondance comme évoquées ci-dessus, chaque table étant utilisé dans un mode spécifique de fonctionnement de la machine tournante.

Comme on le verra dans la suite au vu des exemples de réalisation des circuits mélangeurs 32, 32', 32", ces derniers forment deux types de combinaison différents des signaux qu'ils reçoivent en entrée selon que le signal de commande PWM_{α} est de niveau haut ou de niveau bas. (On entend ici éventuellement par combinaison, une combinaison dans laquelle l'un des deux signaux est à poids nul, c'est-à-dire que seul l'autre signal transmis.)

L'alternance des deux types de combinaison (signaux K_{U}, K_{V}, K_{W}) est émise en sortie de chaque circuit mélangeur 32, 32', 32" à destination d'un filtre passe-bas dont la fréquence de coupure est inférieure à la fréquence du signal de commande PWM_{α} (c'est-à-dire à la fréquence d'alternance des deux types de combinaison) de telle sorte que le signal filtré forme à chaque instant la moyenne des combinaisons des deux types, pondérée par la durée de chacune, qui dépend naturellement du rapport cyclique α du signal de commande PWM_{α}.

La fréquence de coupure de chaque filtre passe-bas 38, 38', 38" est toutefois supérieure à la fréquence des signaux de U, V, W de manière à laisser passer cette composante de l'information. Vues les vitesses de rotation classiques des machines tournantes et la fréquence des signaux capteurs qui en découle (typiquement entre 0 et 600 Hz), on utilise par exemple une fréquence de coupure de 10 kHz, ce qui permet d'utiliser, par exemple également une fréquence de 130 kHz pour le signal de commande.

Le signal filtré F_{U}, F_{V}, F_{W} émis par chaque filtre passe-bas 38, 38', 38" est donc une combinaison des signaux capteurs reçus en entrée du circuit mélangeur 32, 32', 32" correspondant dans lequel l'influence de chacun des signaux reçus en entrée du circuit mélangeur 32, 32', 32" correspondant dépend du rapport cyclique du signal de commande PWM_{α}.On obtient ainsi un signal dont la phase est comprise entre les phases des signaux en entrée et réglable par modification du rapport cyclique α du signal de commande PWM_{α}.

Les signaux filtrés F_{U}, F_{V}, F_{W} sont appliqués respectivement à une première entrée de seconds circuits déclencheurs à hystérésis correspondants 40, 40', 40" qui reçoivent chacun sur une seconde entrée la moyenne des signaux capteurs U, V, W déterminée par un circuit moyennant 42 et par un filtre passe-bas 43 du même type que les filtres passe-bas 38, 38', 38" précédemment mentionnés. On s'affranchie grâce à l'utilisation des déclencheurs à hystérésis 40, 40', 40" des décalages de tension générés dans les circuits mélangeurs 32, 32', 32".

On obtient ainsi en sortie des déclencheurs à hystérésis 40, 40', 40" des signaux U', V', W' correspondant respectivement aux signaux capteurs en entrée U, V, W avec une avarice de phase qui dépend du rapport cyclique α du signal de commande PWM_{α}.

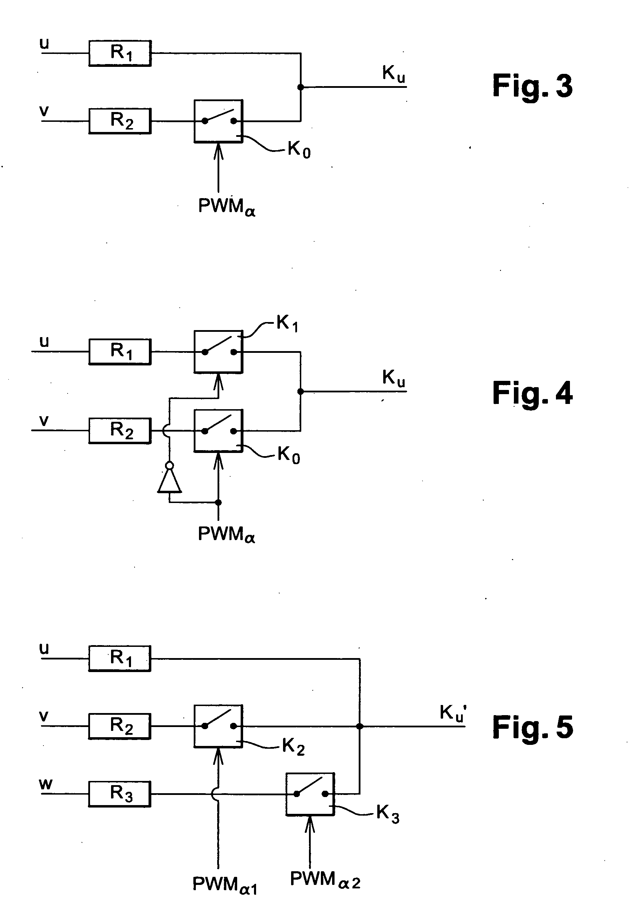

La figure 3 représente un premier exemple envisageable pour la mise en oeuvre de chacun des circuits mélangeurs 32, 32', 32" décrits ci-dessus. Cet exemple est écrit comme mise en oeuvre du circuit mélangeur 32 (qui reçoit en entrée le signal U et le signal V en avance de phase de 120° par rapport au signal U), mais s'applique à l'identique aux mélangeurs 32', 32" en appliquant respectivement en entrée les signaux V et W, et les signaux W et U.

Dans cet exemple de réalisation, le premier signal (ici le signal U) est appliqué à un noeud formant la sortie à travers un résistor R1, tandis que le second signal K_{U} (ici le signal V) est appliqué à ce même noeud à travers l'association série d'un résistor R2 et d'un interrupteur K₀ commuté sur commande du signal de commande PWM_{α}.

On obtient ainsi en sortie (c'est-à-dire au niveau du noeud précité) un signal K_{U} qui dépend seulement du signal capteur U lors des phases du signal de commande PWM_{α} qui force l'ouverture de l'interrupteur K₀, tandis que le signal de sortie K_{U} dépend à la fois des signaux U et V (pondéré en outre selon les résistors R1 et R2) lors des phases du signal commande PWM_{α} qui provoquent la fermeture de l'interrupteur K₀. Cette solution permet donc d'obtenir après filtrage passe-bas un signal filtré F_{U}.

On voit ainsi clairement qu'on obtient, pour des valeurs du rapport cyclique α variant entre 0 et 1, un signal en sortie F_{U} dont la phase varie entre celle du signal U lui-même (lorsque α=0) et une phase proche de celle du signal V (lui-même en avance de phase de 120° par rapport au signal U) lorsque α=1, en choisissant des valeurs adéquates pour R1 et R2 (plus R1 est grand par rapport à R2, plus l'avance de phase de F_{U} s'approche de 120° pour α=1).

**La** **figure 4** représente un second exemple de réalisation pour les circuits mélangeurs 32, 32', 32" de la figure 2.

Comme précédemment, l'exemple décrit s'applique au circuit mélangeur 32 mais s'appliquerait à l'identique au circuit mélangeur 32', 32".

Dans ce second exemple, le signal capteur U est transmis à un noeud formant sortie à travers l'association série d'un résistor R1 et d'un interrupteur K₁, tandis que le signal capteur V est transmis au noeud formant sortie à travers l'association série d'un résistor R2 et d'un interrupteur K₀.

L'interrupteur K₀ est commuté en fonction du signal de commande PWM_{α} tandis que l'interrupteur K₁ reçoit le même signal de commande PWM_{α} à travers un inverseur de telle sorte que l'interrupteur K₁ est commuté à l'inverse de l'interrupteur K₀.

Dans les phases où le signal de commande PWM_{α} provoque l'ouverture de l'interrupteur K₀, il provoque ainsi la fermeture de l'interrupteur K₁ de telle sorte que signal de sortie K_{U} (au noeud formant sortie) ne dépend que du signal capteur U.

A l'inverse, lorsque le signal de commande PWM_{α} entraîne la fermeture de l'interrupteur K₀, il entraîne également l'ouverture de l'interrupteur K₁ de telle sorte que le signal de sortie K_{U} ne dépend que du signal capteur V.

Cette solution permet d'obtenir pour le signal filtré F_{U}.

Comme précédemment, en faisant varier le rapport cyclique α entre 0 et 1, on obtient une avance de phase du signal F_{U} par rapport au signal U variable, entre 0° (pour α=0) et cette fois précisément 120° (pour α=1).

**La** **figure 5** représente une variante de réalisation d'un circuit mélangeur, selon laquelle le circuit mélangeur reçoit en entrée les trois signaux capteurs U, V, W.

Le signal capteur U est transmis à un noeud formant sortie à travers un résistor R1.

Le signal capteur V (en avance de phase de 120° par rapport au signal U) est transmis au noeud formant sortie à travers l'association série d'un résistor R2 et d'un premier interrupteur K₂ commandé par un premier signal de commande PWM_{α1}.

Le signal capteur W est quant à lui transmis au noeud formant sortie à travers une association série du même type, à savoir un résistor R3 et un second interrupteur K₃ commandé par un signal de commande PWM_{α2}.

On obtient donc, après filtrage passe-bas comme décrit précédemment, un signal F_{U'}.

L'avance du signal en sortie de phase peut ainsi varier entre 0° et une valeur légèrement inférieure à 240° (en choisissant des valeurs de résistance pour les résistors R1, R2, R3 qui rendent négligeables le signal U sur le noeud de sortie K'_{U} lorsque l'interrupteur K₃ est fermé).

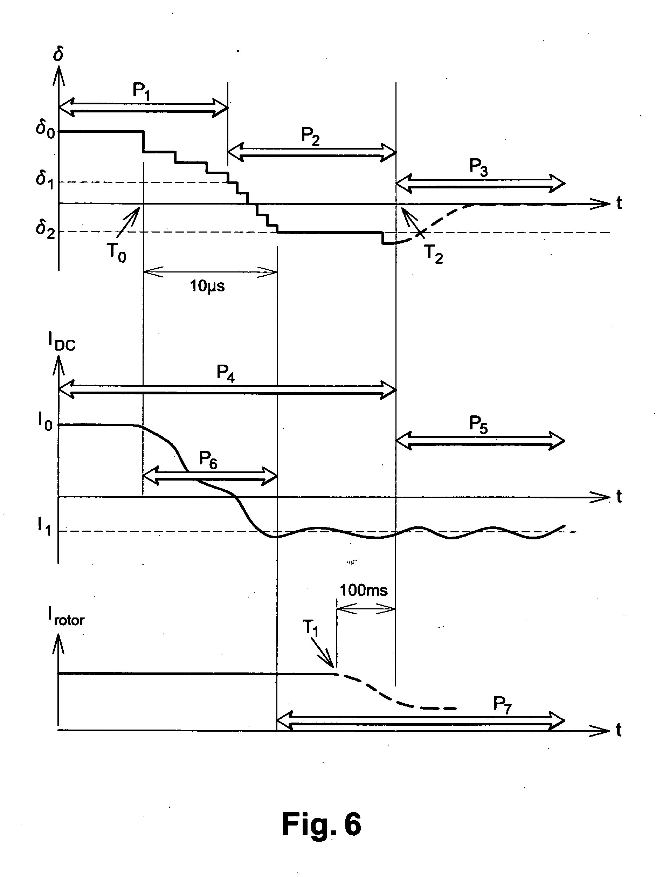

**La** **figure 6** représente un exemple possible de mise en oeuvre d'une transition entre un mode moteur de l'alternateur-démarreur et un mode alternateur dans lequel les courants bobine sont commandés par les diodes du pont de puissance (mode redressement), en passant par un mode alternateur piloté dans lequel les interrupteurs du pont de puissance 10 sont toujours commandés par le circuit de commande 20.

Dans les phases initiales de cette transition, l'alternateur-démarreur fonctionne en mode moteur, par exemple pour assister la rotation du moteur thermique qui lui est associé. Dans cette phase de fonctionnement, la consigne de décalage de phase δ permet un déclenchement en avance de phase de la tension par rapport à la force électromotrice, si bien que le courant peut croître suffisamment sans être étouffé et générer ainsi un couple important même à des vitesses de rotation relativement élevées. Cette consigne de décalage de phase a pour valeur initiale δ₀.

Par exemple, pour une vitesse de rotation de 6000 tr/min, on obtient un couple maximal pour une avance de phase δ de l'ordre de 75° (par exemple comprise entre 70° et 80°).

La procédure de transition vers le mode alternateur débute alors à un instant T₀ par la diminution, par exemple par paliers successifs, de la consigne d'avance de phase δ jusqu'à une valeur δ₂.

Le passage de la consigne de la valeur δ₀ à la valeur δ₂ s'effectue par exemple sur une durée de 10 µs, en passant par exemple par une dizaine de valeurs intermédiaires. La diminution de la valeur de l'avance de phase δ à partir de la valeur initiale δ₀ provoque une diminution du couple moteur engendré par la machine électrique, et ce jusqu'à ce que l'avance de phase atteigne une valeur δ₁ à laquelle le couple fourni par la machine électrique s'annule.

On peut ainsi définir une phase P₁ de la transition, pendant laquelle les valeurs d'avance de phase varient entre δ₀ et δ₁ et qui permettent donc la réalisation d'un couple moteur de plus en plus faible : la phase P₁ peut ainsi être qualifiée de mode moteur.

Comme déjà mentionné, la diminution de l'avance de phase δ se poursuit en deçà de la valeur δ₁ de sorte que la machine électrique génère un couple de plus en plus résistant : le courant continu I_{DC} est donc inversé et provoque une charge de la batterie : on travaille alors en mode *"alternateur piloté"* P₂.

Dans le cas d'une rotation à 6000 tr/min étudiée ici, le changement du sens du courant continu I_{DC} se produit pour un décalage de phase δ₁ de l'ordre de 25° (en général entre 20° et 30°). On peut, dans ce cas également, stabiliser le fonctionnement en mode alternateur piloté à une valeur de décalage de phase δ₂ comprise entre 0° et -30°.

On a ainsi pu passer sur un temps relativement bref P₆ (ici 10 µs) d'un fonctionnement de type moteur à un fonctionnement de type alternateur. Au cours de cette phase P₆, le courant du rotor a été maintenu et la diminution, puis l'inversion, du couple s'est traduite par un changement de signe du courant continu I_{DC}.

Ainsi, à partir du moment de la décision du passage en mode alternateur (instant T₀ mentionné plus haut), le changement du sens du courant continu I_{DC} (période P₆) est relativement rapide, de l'ordre de 10 µs, ce qui permet d'obtenir à brève échéance un courant continu I₁ disponible pour alimenter le réseau électrique du véhicule (période P₇).

On peut remarquer qu'en mode moteur P₁ et en mode alternateur piloté P₂, le décalage de phase δ permet de contrôler le courant continu I_{DC} (période P₄).

Une fois le fonctionnement en mode alternateur piloté P₂ stabilisé (c'est-à-dire que la machine génère un courant à peu près stable comme indiqué sur la période P₇), on procède à partir d'un instant T₁ au défluxage du rotor, ce qui correspond à la diminution du courant dans celui-ci avec une constante de temps relativement importante (en général de l'ordre de 100 ms).

La réduction du courant dans le rotor Iᵣₒₜₒᵣ peut rendre nécessaire une légère correction du décalage de phase δ comme cela est indiqué en figure 6 (où la valeur de δ diminue légèrement en fin de période de fonctionnement en mode alternateur piloté P₂).

Lorsque le rotor est défluxé, c'est-à-dire que le courant dans celui-ci arrive au niveau de ce qu'il devrait être en fonctionnement alternateur, on peut mettre fin à la commande du pont de puissance 10 par le circuit de commande 20 à un instant T₂, de sorte que la machine fonctionne comme un alternateur classique, en mode redressement : il s'agit du mode alternateur P₃ où la conduction dans les bobines est commandée par les diodes du pont de puissance. Le courant continu I_{DC} dépend alors du courant rotor Iᵣₒₜₒᵣ (période P₅), et non plus du décalage de phase δ.

L'instant T₂ est par exemple prédéfini 100 ms après l'instant T₁ afin de permettre un défluxage suffisant avant de passer en mode alternateur P₃.

Dans l'exemple de transition qui vient d'être décrit, on commence le défluxage du rotor à un instant T₁ postérieur à l'entrée dans le mode alternateur piloté P₂ qui s'accompagne du changement de signe du courant continu I_{DC}. En variante, on pourra procéder plus tôt au défluxage du rotor, à savoir par exemple dès le déclenchement de la phase de transition à l'instant P₀.

Les exemples qui précèdent ne représentent que des modes possibles de mise en oeuvre de l'invention qui est limitée par les revendications.

## Revendications

1. Procédé de commande d'une machine électrique tournante polyphasée réversible, dans laquelle au moins un circuit bobiné (12) est alimenté à travers un pont d'interrupteurs (10), **caractérisé par** les étapes suivantes :
- commande (P₁) du pont (10) pour délivrer au circuit bobiné (12) une tension périodique avec un décalage de phase (δ) par rapport à une force électromotrice induite dans ledit circuit bobiné, tel qu'un couple moteur est généré, le décalage de phase ayant initialement une première valeur (δ₀);
- commande (P₂) du pont (10) pour délivrer audit circuit bobiné (12) une tension périodique avec ledit décalage de phase (δ) entraînant la réalisation d'un couple compris entre ledit couple moteur et l'opposé dudit couple moteur, le décalage de phase prenant une pluralité de valeurs lors de cette commande ;
- basculement (T₂) du pont (10) en mode redressement ;
- réduction du courant d'induction (Iᵣₒₜₒᵣ), ladite étape de réduction étant comprise entre l'étape de commande (P₂) du pont avec un second décalage de phase et l'étape de basculement (T₂) du pont en mode redressement.

2. Procédé de commande selon la revendication 1, **caractérisé en ce que** le décalage de phase (δ) de la tension délivrée prend une pluralité de valeurs décroissantes dans le temps entre la première valeur de décalage de phase (δ₀) et une seconde valeur de décalage de phase (δ₂).

3. Procédé de commande selon la revendication 1 ou 2, **caractérisé en ce que** l'utilisation du premier décalage de phase (δ₀) et l'utilisation du second décalage (δ₂) sont séparées d'un temps compris entre 1µs et 100 µs.

4. Procédé selon l'une des revendications précédentes, **caractérisé en ce que** l'étape de basculement (T₂) est postérieure de plus de 10 ms à l'étape de réduction (T₁).

5. Procédé selon l'une des revendications précédentes, **caractérisé en ce que** l'étape de basculement (T₂) est postérieure de moins de 0,5 s à l'étape de réduction (T₁).

6. Procédé selon l'une des revendications précédentes, **caractérisé en ce que** la vitesse de rotation de la machine tournante est essentiellement constante au cours de l'ensemble des étapes précitées.

7. Procédé selon l'une des revendications précédentes, **caractérisé en ce que** ledit couple de signe opposé vaut environ un couple exercé par la machine tournante en mode redressement.

8. Procédé selon la revendication 2, **caractérisé par le fait que** le décalage de phase (δ) diminue par paliers successifs entre les première et deuxième valeurs de décalage de phase.

## Patentansprüche

1. Verfahren zur Steuerung einer reversiblen elektrischen rotierenden mehrphasigen Maschine, bei dem mindestens eine Spulenschaltung (12) durch eine Unterbrecherbrücke (10) versorgt wird, **gekennzeichnet durch** die folgenden Schritte:
- Steuerung (P₁) der Brücke (10), um an die Spulenschaltung (12) eine periodische Spannung mit einer Phasenverschiebung (δ) in Bezug zu einer in die Spulenschaltung induzierten elektrischen Antriebskraft zu liefern, so dass ein Antriebsmoment erzeugt wird, wobei die Phasenverschiebung ursprünglich einen ersten Wert (δ₀) aufweist;
- Steuerung (P₂) der Brücke (10), um an die Spulenschaltung (12) eine periodische Spannung mit der Phasenverschiebung (δ) zu liefern, die zur Erzeugung eines Moments zwischen dem Antriebsmoment und dem Gegenteil des Antriebsmoments führt, wobei die Phasenverschiebung eine Vielzahl von Werten bei dieser Steuerung annimmt:
- Schwenken (T₂) der Brücke (10) in den Gleichrichtermodus;
- Verringerung des Induktionsstroms (Iᵣₒₜₒᵣ), wobei der Schritt der Verringerung zwischen dem Steuerschritt (P₂) der Brücke mit einer zweiten Phasenverschiebung und dem Schritt des Schwenkens (T₂) der Brücke in den Gleichrichtermodus liegt.

2. Steuerverfahren nach Anspruch 1, **dadurch gekennzeichnet, dass** die Phasenverschiebung (δ) der gelieferten Spannung eine Vielzahl von mit der Zeit abnehmenden Werten zwischen dem ersten Wert der Phasenverschiebung (δ₀) und einem zweiten Wert der Phasenverschiebung (δ₂) annimmt.

3. Steuerverfahren nach Anspruch 1 oder 2, **dadurch gekennzeichnet, dass** die Verwendung der ersten Phasenverschiebung (δ₀) und die Verwendung der zweiten Phasenverschiebung (δ₂) um eine Zeit zwischen 1 µs und 100 µs getrennt sind.

4. Verfahren nach einem der vorhergehenden Ansprüche, **dadurch gekennzeichnet, dass** der Schritt des Schwenkens (T₂) um mehr als 10 ms nach dem Schritt der Verringerung (T₁) stattfindet.

5. Verfahren nach einem der vorhergehenden Ansprüche, **dadurch gekennzeichnet, dass** der Schritt des Schwenkens (T₂) um weniger als 0,5 s nach dem Schritt der Verringerung (T₁) stattfindet.

6. Verfahren nach einem der vorhergehenden Ansprüche, **dadurch gekennzeichnet, dass** die Rotationsgeschwindigkeit der rotierenden Maschine während der Gesamtheit der vorgenannten Schritte im Wesentlichen konstant ist.

7. Verfahren nach einem der vorhergehenden Ansprüche, **dadurch gekennzeichnet, dass** das Moment mit umgekehrtem Vorzeichen ungefähr gleich dem Moment ist, das von der rotierenden Maschine im Gleichrichtermodus ausgeübt wird.

8. Verfahren nach Anspruch 2, **dadurch gekennzeichnet, dass** die Phasenverschiebung (δ) in aufeinanderfolgenden Stufen zwischen dem ersten und dem zweiten Wert der Phasenverschiebung geringer wird.

## Claims

1. Method for controlling a reversible polyphase rotating electrical machine, in which at least one wound circuit (12) is powered through a switch bridge (10), **characterized by** the following steps:
- controlling (P₁) the bridge (10) to deliver to the wound circuit (12) a periodic voltage with a phase offset (δ) relative to an electromotive force induced in said wound circuit, such that a driving torque is generated, the phase offset initially having a first value (δ₀);
- controlling (P₂) the bridge (10) to deliver to said wound circuit (12) a periodic voltage with said phase offset (δ) resulting in the production of a torque of between said driving torque and the opposite of said driving torque, the phase offset taking a plurality of values during this control;
- switching (T₂) the bridge (10) over to rectification mode;
- reducing the induction current (Iᵣₒₜₒᵣ), said reduction step taking place between the step of controlling (P₂) the bridge with a second phase offset and the step of switching (T₂) the bridge over to rectification mode.

2. Control method according to Claim 1, **characterized in that** the phase offset (δ) of the voltage delivered takes a plurality of values that decrease in time between the first phase offset value (δ₀) and a second phase offset value (δ₂).

3. Control method according to Claim 1 or 2, **characterized in that** the use of the first phase offset (δ₀) and the use of the second offset (δ₂) are separated by a time of between 1 µs and 100 µs.

4. Method according to one of the preceding claims, **characterized in that** the switchover step (T₂) takes place more than 10 ms after the reduction step (T₁).

5. Method according to one of the preceding claims, **characterized in that** the switchover step (T₂) takes place less than 0.5 s after the reduction step (T₁).

6. Method according to one of the preceding claims, **characterized in that** the speed of rotation of the rotating machine is essentially constant during all the abovementioned steps.

7. Method according to one of the preceding claims, **characterized in that** said torque of opposite sign is approximately equal to a torque exerted by the rotating machine in rectification mode.

8. Method according to Claim 2, **characterized in that** the phase offset (δ) decreases by successive levels between the first and second phase offset values.
